Europäisches Patentamt

**European Patent Office**

Office européen des brevets

(11) Veröffentlichungsnummer: **0 016 318**
**B1**

(12) **EUROPÄISCHE PATENTSCHRIFT**

(45) Veröffentlichungstag der Patentschrift: 24.08.83

(51) Int. Cl.³: **H 04 N 5/14**

(21) Anmeldenummer: 80100486.2

(22) Anmeldetag: 31.01.80

(54) Korrekturschaltung zur Verbesserung der Konturenschärfe von Fernsehbildern.

(30) Priorität: 08.03.79 CH 2225/79

(43) Veröffentlichungstag der Anmeldung:
01.10.80 Patentblatt 80/20

(45) Bekanntmachung des Hinweises auf die Patenterteilung:
24.08.83 Patentblatt 83/34

(84) Benannte Vertragsstaaten:
AT DE FR GB IT NL SE

(56) Entgegenhaltungen:
PROCEEDINGS OF THE INSTITUTION OF
ELECTRICAL ENGINEERS, Band 121, Nr. 9,
September 1974, Seiten 929—934 London,
G. B. DEELEY et al.: "Improved digital aperture
corrector"
SMPTE JOURNAL, Band 87, Nr. 1, January 1978,
Seiten 24—28 New York, U.S.A. FAROUDJA et
al.: "Digital and analog enhancement
techniques"

(73) Patentinhaber: SIEMENS-ALBIS
AKTIENGESELLSCHAFT
EGA1/Verträge und Patente Postfach
CH-8047 Zürich (CH)

(72) Erfinder: Tschannen, Gottfried
Seebahnstrasse 177/153
CH-8004 Zürich (CH)

(56) Entgegenhaltungen:
JOURNAL OF NUCLEAR MEDICINE, Band 11,
Nr. 11, November 1970, Seiten 655—659 New
York, U.S.A. BELL: "Enhanced scintigraphic
information display using computer-generated
ratio techniques"

Courier Press, Leamington Spa, England.

**0016318**

Korrekturschaltung zur Verbesserung der Konturenschärfe von Fernsehbildern

Die vorliegende Erfindung betrifft eine Korrekturschaltung zur Verbesserung der Konturenschärfe von Videobildern gemäß dem Oberbegriff des Patentanspruchs 1.

Bei der Aufnahme von Fernsehbildern unter erschwerten Bedingungen, beispielsweise über einen gestörten Uebergragungskanal, tritt das Problem auf, die Videosignale so zu behandeln, dass die Konturenschärfe des empfangenen Bildes möglichst gut ist. Dieses Problem ist ebenfalls bei der Aufnahme von Videosignalen mittels eines Wärmebildgerätes von Bedeutung. Zur Aufnahme von Videobildern ist es beispielsweise bekannt, die abzubildenden Objekte mit einem Videogerät aufzunehmen, welches das optische Bild in elektrische Signale umwandelt, die in einem nachgeschalteten Analog-/Digital-Wandler in digitale Signale umgesetzt werden. Diese digitalen Signale können in einem Zwischenspeicher gemäss einer ersten Einschreibenorm eingeschrieben und gemäss einer zweiten Auslesenorm ausgelesen werden. Die in der zweiten Norm vorhandenen digitalen Videosignale können dann nach einer Rückumsetzung in einem nachgeschalteten Digital-/Analog-Wandler einem Video-Wiedergabegerät zugeführt werden.

Mit einer solchen Einrichtung können zwar Videosignale in einer ersten Norm aufgenommen und in einer zweiten Norm wiedergegeben werden. Ohne zusätzliche Massnahmen ist est aber mit einer solchen Einrichtung nicht möglich, die Konturenschärfe des Bildes zu verbessern.

Zur Verbesserung der Konturenschärfe des Bildes ist beispielsweise aus dem Artikel "Digital and Analog Enhancement Techniques", im SEMPTE Journal, Vo. 87, No. 1 (1978.01), Seiten 24—28, bekannt, ein digitales Filter mit drei Multiplizierern zu verwenden, wobei der Multiplizierfaktor des mittleren Multiplizierers gleich gross wie die Summe der zwei anderen Multiplizierfaktoren ist, jedoch entgegengesetztes Vorzeichen aufweist. Die damit erreichte Verbesserung des Bildes genügt jedoch den bei vielen Anwendungen gestellten Anforderungen nicht.

Zur Verbesserung von Fernsehbildern ist ferner aus dem Artikel "Improved digital aperture corrector", in Proc. IEEE, Vol. 121, No. 9, Sept. 1974, Seiten 929—934, ein Filter bekannt, das sowohl drei 3-Bit-Schieberegister als auch zwei Linien-Verzögerungsleitungen aufweist. Dabei ist die Realisierung eines solchen Filters sehr aufwendig, wenn man mit mehr als drei Multiplizierfaktoren arbeiten will.

Der Zweck der vorliegenden Erfindung besteht nun darin, eine Korrekturschaltung zu schaffen, mit deren Hilfe eine bedeutende Verbesserung der Konturenschärfe mit relativ wenig Aufwand erreicht werden kann.

Dies wird erfindungsgemäss mit einer Korrekturschaltung erreicht, wie sie im Anspruch 1 gekennzeichnet ist. Vorteilhafte Ausführungen der Erfindung sind in den weiteren Ansprüchen angegeben.

Die Erfindung wird nun durch Beschreibung von Ausführungsbeispielen anhand von Zeichnungen näher erläutert. Dabei zeigen:

Fig. 1 den prinzipiellen Aufbau einer Einrichtung nach der Erfindung,
Fig. 2 ein erstes Beispiel einer Korrekturschaltung,
Fig. 3 ein erstes Zeitdiagramm für verschiedene Signale,
Fig. 4 ein zweites Beispiel einer erfindungsgemässen Korrekturschaltung,
Fig. 5 ein drittes Beispiel einer erfindunggemässen Korrekturschaltung,
Fig. 6 ein zweites Zeitdiagramm für verschiedene Signale.

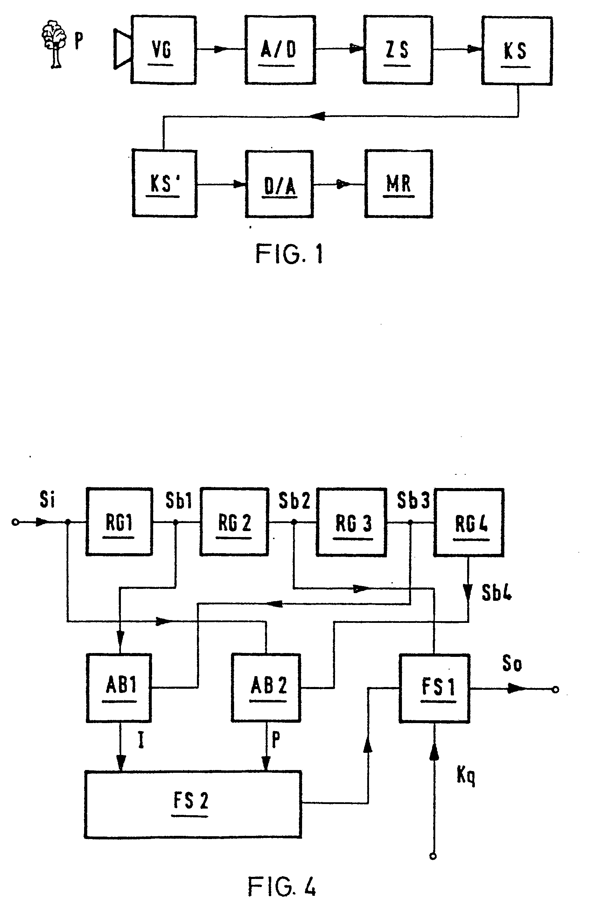

Die Einrichtung nach Fig. 1 weist ein Videogerät VG auf, welches das Bild eines Objektes P aufnimmt und in Videosignale umwandelt, die dann über den Analog-/Digital-Wandler A/D dem Eingang eines Zwischenspeichers ZS zugeführt werden, dessen Ausgänge über zwei in Serie geschaltete Korrekturschaltungen KS und KS' mit entsprechenden Eingängen eines Digital-/Analog-Wandlers D/A verbunden sind, an den das Videowiedergabegerät MR (Monitor) angeschlossen ist. Gegenüber einer bekannten Einrichtung mit einem Videogerät, einem Analog-/Digital-Wandler, einem Zwischenspeicher, einem Digital-/Analog-Wandler und einem Videowiedergabegerät weist der Einrichtung nach Fig. 1 zusätzlich zwei Korrekturschaltungen KS und KS' auf, die zwischen dem Zwischenspeicher ZS und dem Digital-/Analog-Wandler D/A eingefügt sind. Aufgabe dieser Korrekturschaltungen ist es, die Videosignale so zu verbessern, dass das Bild im Videowiedergabegerät MR mit einer verbesserten Bildschärfe erscheint. Die Korrekturschaltungen KS und KS' könnten auch zwischen dem Analog-/Digital-Wandler A/D und dem Zwischenspeicher ZS eingefügt sein.

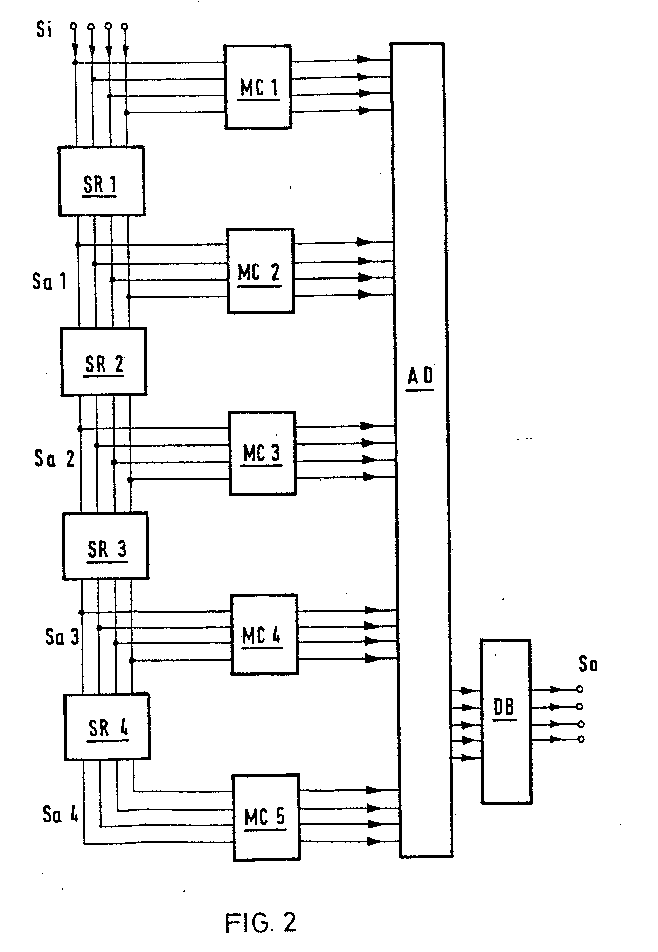

Als Korrekturschaltungen KS und/oder KS' in einer Einrichtung nach Fig. 1 können beispielsweise Korrekturschaltungen nach einer der Figuren 2, 4 oder 5 verwendet werden.

In Fig. 2 ist eine Korrekturschaltung mit einem digitalen Filter dargestellt, das vier in Serie geschaltete vierstufige Schieberegister SR1, SR2, SR3, SR4, fünf Multiplizierer MC1, MC2, MC3, MC4, MC5 und einen Addierer AD aufweist. Dem Addierer AD ist eine digitale Begrenzerschaltung DB nachgeschaltet, welche ein 5-Bit-Ausgangssignal des Addierers AD in ein 4-Bit-Ausgangssignal So der Korrekturschaltung KS umwandelt.

Ein 4-Bit-Signal Si an den vier Eingängen des Schieberegisters SR1 wird daher durch die

2

Korrekturschaltung (Fig. 2) in dieses 4-Bit-Signal So an den vier Ausgängen der Begrenzerschaltung DB unter Bezugnahme der Werte von fünf nebeneinander liegenden Bildpunkten transformiert.

Die Korrekturschaltung KS ist für die Verbesserung der Bildschärfe in horizontaler Richtung vorgesehen. Eine genau gleich aufgebaute, jedoch andere Schieberegister aufweisende Korrekturschaltung KS' kann in Reihe mit der Korrekturschaltung KS geschaltet werden, um das Bild auch in vertikaler Richtung zu verbessern. Dabei ist es bedeutungslos, in welcher Reihenfolge die Korrekturschaltungen KS und KS' hintereinander geschaltet sind.

Die Korrekturschaltung nach Fig. 2 funktioniert nun folgendermassen:

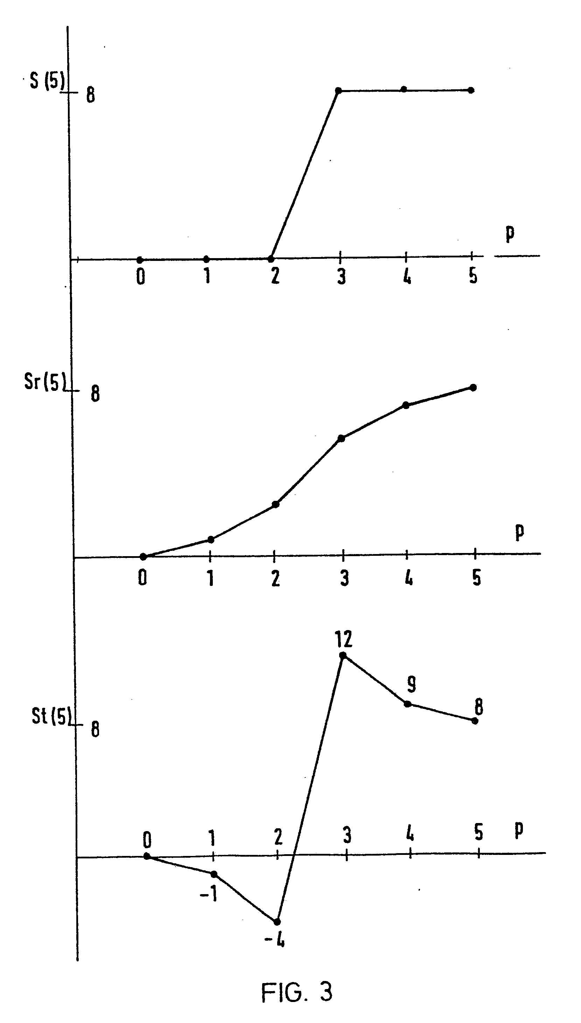

Wenn die Aufnahme der Videobilder nicht unter erschwerten, sondern unter besonders günstigen Bedingungen erfolgen könnte, so wäre im Idealfall beispielsweise ein richtiges Sprungsignal Si=S(5) Fig. 3) anstelle des verfälschten Sprungsignals Si=Sr(5) an der vier Eingängen des Schieberegisters SR1 vorhanden, und die Korrekturschaltungen KS und KS' (Fig. 1) wären gar nicht notwendig.

In Fig. 3 sind die den jeweiligen 4-Bit-Werten entsprechenden Analogwerte der Signale S(5), Sr(5) und St(5) für p=5 nebeneinander liegende Bildpunkte dargestellt. Für diese fünf Bildpunkte hat das richtige Signal S(5) folgende Koordinatenwerte:

$$S(5): (1;0), (2;0), (3;8), (4;8), (5;8)$$

worin ein klarer Sprung der Ordinaten vom Wert 0 auf den Wert 8 beobachtet werden kann. Dabei gilt allgemein für eine Ordinatenwert Si eine Beziehung der Form

$$Si = e1 \cdot 2^0 + e2 \cdot 2^1 + e3 \cdot 2^2 + e4 \cdot 2^3$$

worin mit e1, e2, e3, e4 die vier Bit bezeichnet werden, mit denen bis $2^4=16$ Graustufen eines Bildpunktes angegeben werden könne. Selbstverständlich ist dieses Beispiel nicht an diese Anzahl von 16 Graustufen gebunden.

Die Koordinaten der entsprechenden fünf Bildpunkte für das verfälschte Signal Si=Sr(5) am Eingang der Korrekturschaltung KS können beispielsweise folgende, aus der Formel $Sr(5) \simeq A(1-\tanh(k(p-po)))$ angenäherte Werte aufweisen:

$$Sr(5): (1;08), (2;2,4), (3;5,6), (4;7,2), (5;8)$$

worin der früher vorhandene klare Sprung der Ordinaten vom Wert 0 auf den Wert 8 nicht mehr vorhanden ist.

Es wird nun angenommen, dass durch Korrekturschaltung KS ein mit dem in Fig. 3 dargestellten richtigen Sprungsignal S(5) identisches Eingangssignal Si in ein Ausgangssignal So=St(5) mit folgenden Koordinatenwerten transformiert wird:

$$St(5): (1; -1), (2; -4), (3;12), (4;9), (5;8)$$

Durch diese Transformation wird angenähert die Bedingung $Sr(5) + St(5) = 2 \cdot S(5)$ erfüllt.

Das ergibt sich anschaulich unmittelbar aus Fig. 3, worin S(5) ein gewünschtes korrigiertes Signal am Ausgang der Korrekturschaltung und Sr(5) ein durch den Uebertragungsweg verfälschtes Eingangssignal ist, wobei der Faktor 2 eine unwesentliche Pegeländerung darstellt.

Die Ordinatenwerte für S(5), Sr(5) und St(5) können nun auch als Komponenten von Vektoren betrachtet werden, wobei der Vektor St(5) aus dem Vektor S(5) in n=5 Schritten transformiert wird.

Eine Korrekturschaltung KS oder KS' transformiert daher allgemein die Eingangssignal matrix Si(n,p) in den Ausgangssignalvektor St(n) derart, die Gleichung

$$St(n) = Si(n,p) \cdot C(n)$$

gilt, worin durch den Vektor C(n)=C(5) die Faktoren C1 bis C5 der Multiplizierer MC1 bis MC5 (Fig. 2) dargestellt sind.

Für Si(n,p)=Si(5,5) mit

$$Si(5,5) = \begin{pmatrix} 1 & 0 & 0 & 0 & 0 \\ 1 & 1 & 0 & 0 & 0 \\ 1 & 1 & 1 & 0 & 0 \\ 1 & 1 & 1 & 1 & 0 \\ 1 & 1 & 1 & 1 & 1 \end{pmatrix}$$

ergibt sich

$$C(5) = Si(5,5)^{-1} \cdot St(5) = \begin{pmatrix} 1 & 0 & 0 & 0 & 0 \\ -1 & 1 & 0 & 0 & 0 \\ 0 & -1 & 1 & 0 & 0 \\ 0 & 0 & -1 & 1 & 0 \\ 0 & 0 & 0 & -1 & 1 \end{pmatrix} \cdot \begin{pmatrix} -1 \\ -4 \\ 12 \\ 9 \\ 8 \end{pmatrix} \cdot 1/8 = \begin{pmatrix} -1 \\ -3 \\ 16 \\ -3 \\ -1 \end{pmatrix} \cdot 1/8,$$

worin 1/8 ein Normierungsfaktor ist und worin die Werte $-1, -4, 12, 9$ und 8 derart nach Ermessen gewählt wurden, dass angenähert die Beziehung $Sr(5) + St(5) = 1 \cdot S(5)$ gilt.

Wenn daher die Multiplizierer MC1 bis MC5 die Multiplizierfaktoren

$$C1 = C5 = -1/8; C2 = C4 = -3/8; C3 = 2$$

aufweisen, so erscheint ein Ausgangssignal So, das aufgrund der invertierten Matrixtransformation gegenüber dem Eingangssignal Si verbessert ist.

Die einzelnen Speicherinhalte der vierstufigen Schieberegister SR1 bis SR4 der in Fig. 2 dargestellten Korrekturschaltung KS entsprechen den einzelnen Helligkeitswerten der einzelnen diskreten Bildpunkte, die nebeneinander liegen. Dabei sind für die Verbesserung der Konturenschärfe in horizontaler Richtung die Schieberegister SR1 bis SR4 mit je einer Speicherzelle pro Stufe vorgesehen.

Die Werte in den Schieberegistern SR1, SR2, SR3 und SR4 werden nun mit den Faktoren C2, C3, C4 bzw. C5 und der Eingangswert am Schieberegister SR1 mit dem Faktor C1 multipliziert. Die Multiplikationswerte werden sodann im Addierer AD addiert, dessen Ausgangssignal ein in bezug auf die Konturenschärfe in horizontaler Richtung verbessertes Signal darstellt. In der nachgeschalteten digitalen Begrenzerschaltung DB werden die 5-Bit-Eingangssignale als 4-Bit-Videosignale begrenzt, deren dargestellte Werte den 16 Graustufen entsprechen. Dafür werden Eingangssignale, die einem negativen Wert entsprechen, als ein Null-Graustufenwert-Ausgangssignal und Eingangssignale, die einem Wert von mehr als 15 Graustufen entsprechen, als ein 15-Graustufenwert-Ausgangssignal abgegeben. In allen anderen Fällen bleibt das Ausgangssignal gleich dem Eingangssignal.

Der Vektor $(-1, -3, +16, -3, -1) : 8$ kann allgemein folgende Form haben:

$$(-f, -g, +h, -g, -f)$$

Dabei gelten die Bedingungen $\qquad |h| > |f|, |h| > |g|$

und $\qquad\qquad\qquad sign\ (h) = -sign\ (-f-g)$

Zur Verbesserung der Konturenschärfe in vertikaler Richtung kann nun dieses 4-Bit-Signal So einer zweiten Korrekturschaltung KS′ mit vier vierstufigen Schieberegistern zugeführt werden, die beispielsweise je 512 Speicherzellen pro Stufe aufweist, wenn die Anzahl Punkte pro Zeile 512 beträgt und jede Stufe einem Bitwert des 4-Bit-Signals entspricht.

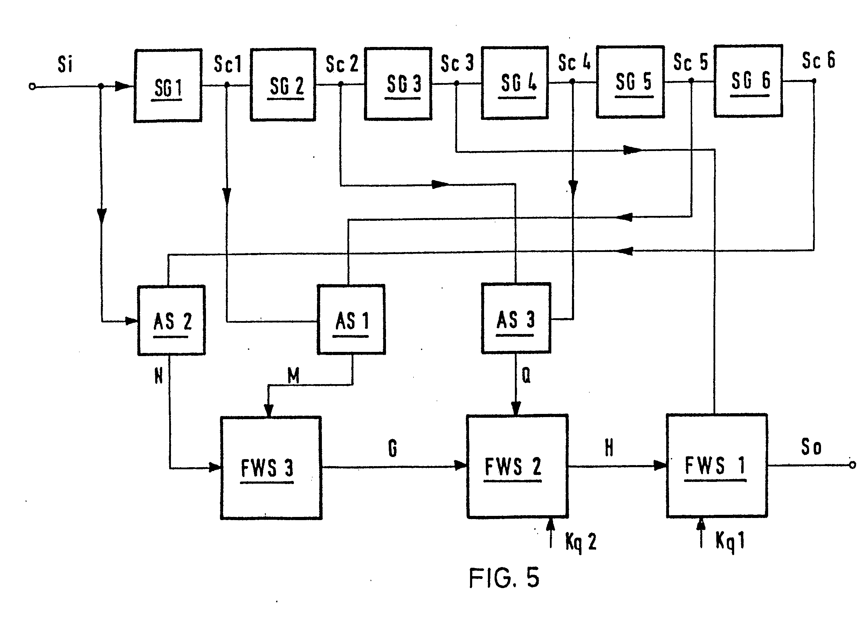

Die in Fig. 4 dargestellte Korrekturschaltung weist vier in Reihe geschaltete vierstufige Schieberegister RG1, RG2, RG3, RG4 mit je einer Speicherzelle pro Stufe auf. Dabei ist der Ausgang des ersten Schieberegisters RG1 mit dem ersten Eingang und der Ausgang des dritten Schieberegisters RG3 mit dem zweiten Eingang einer ersten Addierschaltung AB1 und der das Eingangssignal Si empfangende Eingang des ersten Schieberegisters RG1 mit dem ersten Eingang und der Ausgang des vierten Schieberegisters RG4 mit dem zweiten Eingang einer zweiten Addierschaltung AB2 verbunden, wobei diese Verbindungen aus Mehrdrahtleitungen beispielsweise für die Uebertragung von digitalen Signalen e1, e2,...en bestehen, durch welche das Eingangssignal Si dargestellt wird.

Das n-Bit-Ausgangssignal des zweiten Schieberegisters RG2 ist entsprechenden Eingängen eines das verbesserte n-Bit-Ausgangssignal So abgebenden ersten Festwertspeichers (Read only memory) FS1 zugeführt, der eingangsseitig einerseits mit einem q-Bit-Kontrollsignal Kq und andererseits mit dem n-Bit-Ausgangssignal eines zweiten Festwertspeichers FS2 beaufschlagt ist. Dabei ist dieser zweite Festwertspeicher FS2 einerseits mit dem Ausgang der ersten Addierschaltung AB1 und andererseits mit dem Ausgang der zweiten Addierschaltung AB2 über je eine (n+1)-Bit-Leitung verbunden, da im Hinblick auf den Additionsübertrag eine zusätzliche Leitung notwendig ist.

Die Korrekturschaltung nach Fig. 4 funktioniert nun folgendermassen:

Es seien Si, Sb1, Sb2, Sb3, Sb4 das Eingangssignal und die Signale am Ausgang des ersten, zweiten, dritten bzw. vierten Schieberegisters RG1, RG2, RG3, RG4 und So das Ausgangssignal der Korrekturschaltung. Es gilt:

$$Si = (e1, e2,...en)$$
$$Sb1 = (w1, w2,...wn)$$
$$Sb2 = (x1, x2,...xn)$$
$$Sb3 = (y1, y2,...yn)$$
$$Sb4 = (z1, z2,...zn)$$
$$So = (a1, a2,...an)$$

In den Addierschaltungen AB1 und AB2 werden die Summen

$$Sb1 + Sb3 = (w1 + y1, w2 + y2,...wn + yn) = I$$

bzw. $\qquad\qquad Si + Sb4 = (e1 + z1, e2 + z2,...en + zn) = P$

gebildet.

4

**0016318**

Der Festwertspeicher FS2 ist derart programmiert, dass er ein Ausgangssignal F=(F1, F2, F3, F4) abgibt nach der Formel

$$F=(P \cdot f+l \cdot g) \text{ oder } F=(P+3 \cdot l):8$$

womit die Werte f und g des obengenannten Vektors (−f, −g, +h, −g, −f) erfasst sind.

Der Fertwertspeicher FS1 ist derart programmiert, dass er ein Ausgangssignal So abgibt nach der Formel

$$So=(1/2) \cdot h \cdot Sb2+((1/2) \cdot h \cdot Sb2-F) \cdot Kq$$

worin Kq eine Funktion von q beliebigen Binärsignalen ist.

Dadurch wird beispielsweise für Kq=1, f=1/8, g=3/8 und h=16/8

$$So=(-Si-3 \cdot Sb1+16 \cdot Sb2-3 \cdot Sb3-Sb4):8$$

in Uebereinstimmung mit dem Resultat, das man als Addition der Produkte der Signalwerte Si, Sb1, Sb2, Sb3, Sb4 mit den Gewichten (−1, −3, 16, −3, −1): 8 auch in einer Korrekturschaltung KS nach Fig. 2 erhalten kann.

Durch das Signal Kq kann der Vektor (−f, −g, +h, −g, −f) modifiziert werden. Zum Beispiel kann Kq die Werte 0; 0,5; 1 und 2 haben.

In einer Korrekturschaltung KS′ nach Fig. 4 für die Verbesserung der Konturenschärfe in vertikaler Richtung müssen ebenfalls Schieberegister vorhanden sein, die so viele Speicherzellen aufweisen, wie Bildpunkte pro Zeile gemäss einer entsprechenden Norm vorgesehen sind.

Die in Fig. 5 dargestellte Korrekturschaltung KS weist sechs in Reihe geschaltete n-stufige Schieberegister SG1, SG2, SG3, SG4, SG5, SG6 mit je einer Speicherzelle pro Stufe auf. Der Ausgang des ersten Schieberegisters SG1 ist mit dem ersten Eingang und der Ausgang des fünften Schieberegisters SG5 mit dem zweiten Eingang einer ersten Addierschaltung AS1 und der das Eingangssignal Si empfangende Eingang des ersten Schieberegisters SG1 mit dem ersten Eingang und der Ausgang des sechsten Schieberegisters SG6 mit dem zweiten Eingang einer zweiten Addierschaltung AS2 verbunden. Der Ausgang des zweiten Schieberegisters SG2 ist mit dem ersten Eingang und der Ausgang des vierten Schieberegisters SG4 mit dem zweiten Eingang einer dritten Addierschaltung AS3 verbunden. Dabei bestehen diese Verbindungen aus Mehrdrahtleitung beispielsweise für die Uebertragung von n digitalen Signalen e1, e2,...en, durch welche das Eingangssignal Si dargestellt wird.

Das n-Bit-Ausgangssignal des dritten Schieberegisters SG3 ist entsprechenden Eingängen eines das verbesserte n-Bit-Ausganssignal So abgebenden ersten Festwertspeichers FWS1 zugeführt, der eingangsseitig einerseits mit einem q1-Bit-Kontrollsignal Kq1 und andererseits mit dem n-Bit-Ausgangssignal eines zweiten Festwertspeichers FWS2 beaufschlagt ist. Dabei ist dieser zweite Festwertspeicher FWS2 einerseits über eine (n+1)-Leitung mit dem Ausgang der ersten Addierschaltung AS3 und andererseits mit dem Ausgang eines dritten Festwertspeichers FWS2 verbunden, der eingangsseitig über je eine (n+1)-Leitung an je einen Eingang der Addierschaltung AS1 und AS2 angeschlossen ist. Diese drei (n+1)-Leitungen an den Ausgängen der drei Addierschaltungen S1, AS2, AS3 sind im Hinblick auf den Additionsübertrag notwendig.

Der Festwertspeicher FWS2 ist über einen zusätzlichen Eingang mit einem weiteren q2-Bit-Kontrollsignal Kq2 beaufschlagt.

Die Korrekturschaltung KS nach Fig. 5 funktioniert nun folgendermassen:

Es seien Si, Sc1, Sc2, Sc3, Sc4, Sc5, Sc6 das Eingangssignal, und die Signale am Ausgang des ersten, zweiten, dritten bzw. sechsten Schieberegisters SG1, SG2, SG3, SG4, SG5, SG6 und So das Ausgangssignal der Korrekturschaltung. Es gilt:

$$Si=(e1, e2,...en)$$
$$Sc1=(u1, u2,...un)$$
$$Sc2=(v1, v2,...vn)$$
$$Sc3=(x1, x2,...xn)$$
$$Sc4=(y1, y2,...yn)$$
$$Sc5=(z1, z2,...zn)$$
$$Sc6=(a1, a2,...an)$$

In den Addierschaltungen AS1, AS2 und AS3 werden die Summen

$$Sc1+Sc5=M$$
$$Si+Sc6=N$$
$$Sc2+Sc4=Q$$

bzw.
gebildet.

5

# 0016318

Der Festwertspeicher FWS3 ist derart programmiert, dass er ein Ausgangssignal G abgibt nach der Formel

$$G = (N \cdot i + M \cdot j)$$

womit die Komponenten i und j eines Vektors $(-i, -j, -k, +h, -k, -j, -i)$ erfasst sind.

Die Festwertspeicher FWS2 und FWS1 sind derart programmiert, dass sie je ein Ausgangssignal H bzw. So abgeben nach den Formeln

$$H = (Q \cdot k + G) \cdot kq2$$

bzw.

$$So = h/2 \cdot Sc3 + (h/2 \cdot Sc3 - H) \cdot Kq1$$

Für $Kq1 = Kq2 = 1$, wird beispielsweise

$$So = -i \cdot Si - j \cdot Sc1 - k \cdot Sc2 + h \cdot Sc3 -$$

$$-k \cdot Sc4 - j \cdot Sc5 - i \cdot Sc6$$

in Uebereinstimmung mit dem Resultat, das man als Addition von Produkten der Signalwerte $Si$, $Sc1$, $Sc2$, $Sc3$, $Sc4$, $Sc5$, $Sc6$ mit den Gewichten $(-i, -j, -k, +h, -k, -j, -i)$ auch in einer Korrekturschaltung KS nach Fig. 2 jedoch mit sechs Schieberegistern erhalten kann.

Dabei gelten die Bedingungen

$$|h| > |i|, \ |h| > |j|, \ |h| > |k|$$

und

$$\text{sign} (h) = -\text{sign} (-i-j-k)$$

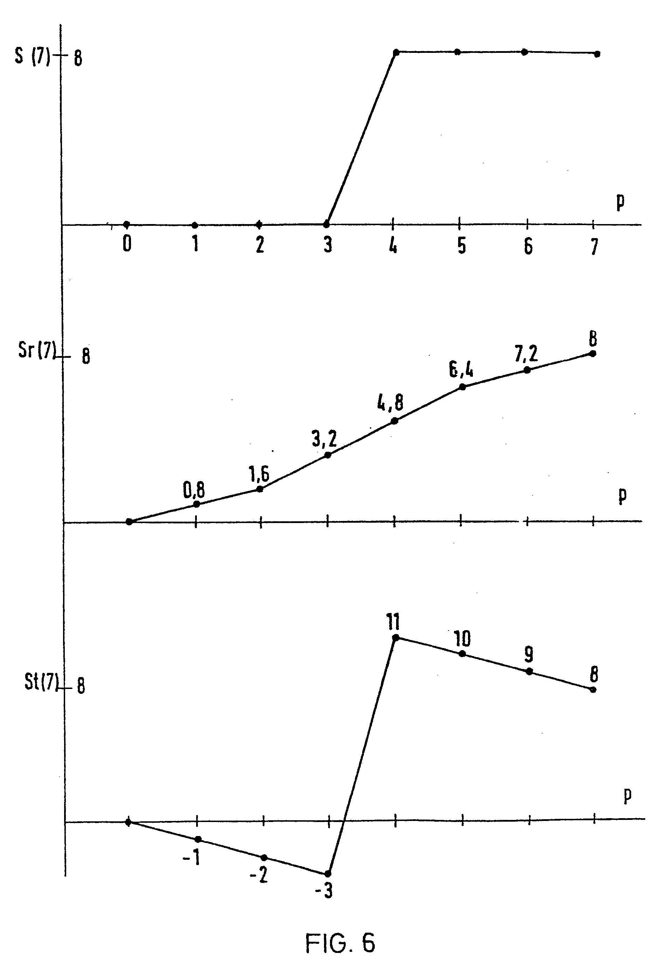

Als numerisches Beispiel wird der Vektor $(-1, -1, -1, +14, -1, -1, -1)$ (Fig. 6) angegeben. Im allgemeinen müssen die Werte der Gewichte i, j, k und h nicht ganzzahlig sein.

Obschon die Festwertspeicher der Korrekturschaltung nach Fig. 4 und 5 auch durch einen einzigen Festwertspeicher ersetzt werden können, ist eine Aufteilung desselben in mehrere Festwertspeicher weniger aufwendig.

## Patentansprüche

1. Korrekturschaltung zur Verbesserung der Konturenschärfe von Videobildern in Einrichtungen, in denen die Videosignale in digitaler Form vorliegen und in einem digitalen Filter verarbeitet werden, dessen Multiplizierfaktoren eine symmetrische Reihe mit einem absoluten Maximum im Zentrum der Reihe bilden, wobei der Absolutwert des Multiplizierfaktors des mittleren Multiplizierers grösser als die Absolutwerte aller anderen Multiplizierfaktoren und das Vorzeichen des mittleren Multiplizierfaktors (C3 bzw. C4) entgegengesetzt zum Vorzeichen der algebraischen Summe aller anderen Multiplizierfaktoren (C1, C2 bzw. C1, C2, C3) ist, dadurch gekennzeichnet, dass der Absolutwert des mittleren Multiplizierfaktors (C3 bzw. C4) grösser ist als der Absolutwert der algebraischen Summe aller anderen Multiplizierfaktoren (C1, C2, C4, C5 bzw. C1, C2, C3 bzw. C5, C6, C7).

2. Korrekturschaltung nach Anspruch 1, dadurch gekennzeichnet, dass eine gerade Anzahl von in Serie geschalteten Schieberegistern (RG1,...RG4; SG1,...SG6) vorgesehen ist, die mit Addierschaltungen (AB1, AB2 bzw. AS1,...AS3) verbunden sind, deren Anzahl die Hälfte der geraden Anzahl von Schieberegistern ist, wobei in jeder dieser Addierschaltungen das Eingangssignal (z.B. Sc1, Fig. 5) eines bestimmten Schieberegisters (z.B. SG2) mit dem Ausgangssignal (z.B. Sc5) eines in der Reihe aller Schieberegister symmetrisch liegenden anderen Schieberegisters (z.B. SG5) addiert wird, und dass mindestens ein Festwertspeicher (FS1, FS2 bzw. FWS1, FWS2, FWS3) vorhanden ist, welchem die Ausgangssignale der Addierschaltungen (AB1, AB2 bzw. AS1, AS2, AS3) und das Ausgangssignal des letzten (RG2 bzw. SG3) der ersten Hälfte der Schieberegister zugeführt werden, und welcher das verbesserte Videosignal als Summe der Produkte des Eingangssignals (Si) und der Ausgangssignale der Schieberegister (RG1,...RG4 bzw. SG1,...SG6) mit Multiplizierfaktoren (C1,...C5 bzw. C1,...C7) abgibt.

3. Korrekturschaltung nach Anspruch 1 oder 2 dadurch gekennzeichnet, dass zur Verbesserung der Konturenschärfe in horizontaler Richtung die Schieberegister je eine Speicherzelle pro Stufe aufweisen.

4. Korrekturschaltung nach Anspruch 1 oder 2, dadurch gekennzeichnet, dass zur Verbesserung der Konturenschärfe in vertikaler Richtung die Schieberegister je so viele Speicherzellen pro Stufe aufweisen, wie Bildpunkte pro Zeile vorgesehen sind.

5. Korrekturschaltung nach Anspruch 3 oder 4 dadurch gekennzeichnet, dass zur Verbesserung der Konturenschärfe in horizontaler und in vertikaler Richtung je eine Korrekturschaltung (KS, KS') vorgesehen ist, die zueinander in Reihe geschaltet sind.

6

**0016318**

6. Korrekturschaltung nach einem der vorangehenden Ansprüche dadurch gekennzeichnet, dass eine digitale Begrenzerschaltung (DB) vorgesehen ist, welche die von den Eingangssignalen dargestellten Werte derart begrenzt, dass an ihrem Ausgang einerseits entweder als Mehr-Bit-Videoausgangssignal ein Minimum-Graustufenwert-Ausgangssignal für Eingangssignale, deren dargestellter Wert kleiner als der Wert einer bestimmten ersten Anzahl von Graustufen ist, oder ein Maximum-Graustufenwert-Ausgangssignal für Eingangssignale, deren dargestellter Wert grösser als der Wert einer bestimmten zweiten Anzahl von Graustufen ist, erscheint und andererseits in den anderen Fällen das jeweilige Eingangssignal unverändert bleibt.

7. Korrekturschaltung nach Anspruch 6, dadurch gekennzeichnet, dass die Begrenzerfunktion der Begrenzerschaltung (DB) von den Festwertspeichern übernommen wird.

## Revendications

1. Circuit de correction pour améliorer la netteté du contour d'images vidéo dans des dispositifs dans lesquels les signaux vidéo se présentent sous forme numérique et sont traités dans un filtre numérique dont les facteurs de multiplication forment une série symétrique avec un maximum absolu au milieu de la série, la valeur absolue du facteur de multiplication du multiplicateur central étant supérieure à la valeur absolue de tous les autres facteurs de multiplication et le signe du facteur de multiplication central (C3 ou C4) étant opposé au signe de la somme algébrique de tous les autres facteurs de multiplication (C1, C2 ou C1, C2, C3), caractérisé par le fait que la valeur absolue de facteur de multiplication central (C3 ou C4) est supérieure à la valeur absolue de la somme algébrique de tous les autres facteurs de multiplication (C1, C2, C4, C5 ou C1, C2, C3 ou C5, C6, C7).

2. Circuit de correction suivant la revendication 1, caractérisé par le fait qu'on prévoit un nombre pair de registres à décalage branchés en série (RG1,...RG4; SG1,...SG6) qui sont reliés à des circuits additionneurs (AB1, AB2 ou AS1 AS3) dont le nombre est égal à la moitié du nombre pair de registre à décalage, le signal d'entrée (par exemple Sc1, figure 5) d'un registre à décalage déterminé (par exemple SG2) étant additionné au signal de sortie (par exemple Sc5) d'un autre registre à décalage (par exemple SG5) disposé symétriquement dans la série de tous les registres à décalage, dans chacun de ces circuits additionneurs, et qu'on prévoit au moins une mémoire fixe (FS1, FS2 ou FWS1, FWS2, FWS3) à laquelle sont appliqués les signaux de sortie des circuits additionneurs (AB1, AB2 ou AS1, AS2, AS3) et le signal de sortie du dernier (RG2 ou SG3) de la première moitié des registres à décalage, et qui délivre le signal vidéo amélioré sous la forme de la somme des produits du signal d'entrée (Si) et des signaux de sortie des registres à décalage (RG1,...RG4 ou SG1,...SG6) par les facteurs de multiplication (C1,...C5 ou C1,...C7).

3. Circuit de correction suivant l'une des revendications 1 ou 2, caractérisé par le fait que pour améliorer la netteté du contour suivant la direction horizontale les registres à décalage comportent respectivement une cellule de mémoire par étage.

4. Circuit de correction suivant l'une des revendications 1 ou 2, caractérisé par le fait que pour améliorer la netteté du contour suivant la direction verticale les registres à décalage comportent respectivement autant de cellules de mémoire par étage qu'il y a de points d'images par ligne.

5. Circuit de correction suivant l'une des revendications 3 ou 4, caractérisé par le fait que pour améliorer la netteté du contour suivant les directions horizontale et verticale on prévoit deux circuits de correction respectifs (KS, KS') qui sont montés en série.

6. Circuit de correction suivant l'une des revendications précédentes, caractérisé par le fait qu'on prévoit un circuit limiteur numérique (DB) qui limite les valeurs représentées par les signaux d'entrée de manière que d'une part il apparaît sur sa sortie soit, sous la forme d'un signal de sortie vidéo comportant plusieurs bits, un signal de sortie de valeurs d'échelons de gris minimum pour des signaux d'entrée dont la valeur représentée est plus faible que la valeur d'un premier nombre déterminé d'échelon de gris, soit un signal de sortie de valeurs d'échelon de gris maximum pour des signaux d'entrée dont la valeur représentée est plus importante que la valeur d'un second nombre déterminé d'échelons de gris, et que d'autre part dans les autres cas le signal d'entrée respectif reste non modifié.

7. Circuit de correction suivant la revendication 6, caractérisé par le fait que la fonction de limitation du circuit limiteur (DB) est assurée par les mémoires fixes.

## Claims

1. A correction circuit for improving the acutance of video images in devices in which video signals are presented in digital form and processed in a digital filter whose multiplying factors form a symmetrical row with an absolute maximum in the centre of the row, where the absolute value of the multiplying factor of the central multiplier is greater than the absolute values of all other multiplying factors, and the plus or minus sign of the central multiplying factor (C3 or C4 as the case may be) is reversed to the plus or minus sign of the algebraic sum of all other multiplying factors (C1, C2 or C1, C2, C3 as the case may be), characterised in that the absolute value of the central multiplying factor (C3 or C4 as the case may be) is greater than the absolute value of the algebraic sum of all other multiplying factors (C1, C2, C4, C5 or C1, C2, C3 or C5, C6, C7 as the case may be).

**0 016 318**

2. A correction circuit as claimed in Claim 1, characterised in that there is provided an even number of series-connected shift registers (RG1,...RG4; SG1,...SG6) connected to a number of adding circuits (AB1, AB2 or AS1,...AS3, as the case may be) half that of the even number of shift registers, the input signal (e.g. Sc1, Figure 5) of a particular shift register in each of these adding circuits being added to the output signal (e.g. Sc5) of another shift register (e.g SG5) symmetrically disposed in the row of all shift registers, and at least one read only store (FS1, FS2 or FWS1, FWS2, FWS3 as the case may be) fed with the output signals of the adding circuits (AB1, AB2 or AS1, AS2, AS3 as the case may be) and the output signal of the last (RG2 or SG3 as the case may be) of the first half of the shift registers to emit the improved video signal as a sum of the products of the input signal (Si) and of the output signals of the shift registers (RG1,...RG4 or SG1,...SG5) with multiplying factors (C1,...C5 or C1,...C7 as the case may be).

3. A correction circuit as claimed in Claim 1 or 2, characterised in that in order to improve the acutance in the horizontal direction each shift register has a storage cell for each stage.

4. A correction circuit as claimed in Claim 1 or 2, characterised in that in order to improve the acutance in the vertical direction the shift registers each possess as many storage cells per stage as there are image elements provided for each cell.

5. A correction circuit as claimed in Claim 3 or 4, characterised in that in order to improve the acutance in the horizontal and in the vertical direction, a correction circuit (KS, KS') is provided in each case, which correction circuits are connected mutually in series.

6. A correction circuit as claimed in one of the preceding Claims, characterised in that there is provided a digital limiting circuit (DB) which limits the values represented by the input signals in such manner that at their output, on the one hand there is either a multiple-bit video output signal as a minimum grey level output signal for input signals, whose represented value is smaller than the value of a particular first number of grey levels, or a maximum grey level output signal for input signals, whose represented value is greater than the value of a particular second number of grey levels, and on the other hand, in the other cases, the respective input signal remains unchanged.

7. A correction circuit as claimed in Claim 6, characterised in that the limiting function of the limiting circuit (DN) is assumed by read only stores.

8

FIG. 1

FIG. 4

1

FIG. 2

FIG. 3

FIG. 5

0016318

FIG. 6